# EUROPEAN PATENT APPLICATION

(11) **EP 2 072 432 A1**
(43) Date of publication of application: **24.06.2009**
(21) Application number: 08172089.8
(22) Date of filing: 18.12.2008
(51) Int. Cl.: B65G 57/03

(54) **Pickup device for a palletising machine for moving egg containing trays.**

(30) Priority: 20.12.2007 IT MI20072390
(71) Applicant: Comarme Automazione s.r.l., 20129 Milano (IT)
(72) Inventor: GARLASCHE', Franco, 27023, CASSOLNOVO (PV) (IT)
(74) Representative: Mittler, Enrico

(57) **Abstract**

A pickup device for a palletising machine (18) is described, for moving packs (16, 66) of articles, preferably egg containing trays (16), comprising a structure (1) supporting a counterthrust wall (6) and a movable frame (2) slidable on guides (23), onto which a fork (3) including tines (4) is fixed, a pressure assembly (7) for stabilising the pack (16) to be moved and a motorised wrist (10) for rotating and connecting to the movable structure of the palletising machine (18).

## Description

The present invention relates to a pickup device for a palletising machine for moving egg containing trays.

Currently there do not exist pickup devices or 'hands' dedicated to trays which contain eggs. Ordinary movement means for loading and unloading is used, which however is ill-suited to the particular base surface of egg containing trays, which has an alternating series of convexities and concavities (corrugations).

Said known means does not permit a safe pickup, so that the risk of breaking the eggs is very high. Often, in fact, to obviate this problem, loading and unloading operations are assigned completely to operators, with a consequent expense of time and effort.

Object of the present invention is to create a means adapted to safely grip and move egg containing trays.

According to the invention, this object is achieved with a pickup device for a palletising machine for moving packs of articles, preferably egg containing trays, characterised by comprising a structure supporting a counterthrust wall and a movable frame slidable on guides, onto which a fork including tines is fixed, a pressure assembly for stabilising the pack to be moved and a motorised wrist for rotating and connecting to the movable structure of the palletising machine.

These and other characteristics of the present invention will be made more clearly evident by the following detailed description of an examplary embodiment thereof which is illustrated without limiting effect in the attached drawings, in which:
figure 1 shows a perspective top view of the pickup device according to the present invention;
figure 2 shows a perspective bottom view of the pickup device;
figure 3 shows a perspective view from behind of the pickup device;
figure 4 shows an overall view of the palletising machine;
figure 5 shows a perspective view of a conveyor belt carrying a pack of egg containing trays;
figure 6 shows a perspective view of the conveyor belt with the trays in the pickup position;

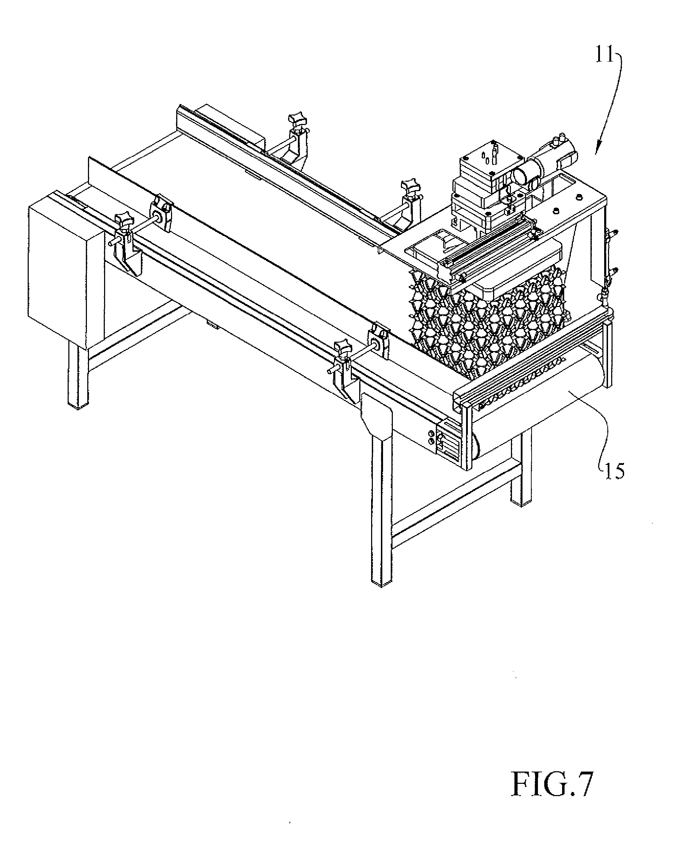

figure 7 shows a perspective view of the conveyor belt with the pickup device inserted into the base of the pack of trays;
figure 8 shows a front view of the pickup device inserted into the base of the pack of trays;
figure 9 shows a front view of the pickup device inserted into the base of the pack of trays in the working position;
figure 10 shows a second overall view of the palletising machine;
figure 11 shows a third overall view of the palletising machine, subsequent to the view in figure 10;
figure 12 shows a side view of the step of picking up an inter-layer sheet;
figure 13 shows a fourth overall view of the palletising machine, subsequent to the view in figure 11;
figure 14 shows a perspective top view of a device for picking up packs of magazines, newspapers and the like;
figure 15 shows a perspective bottom view of a device for picking up packs of magazines, newspapers and the like;
figure 16 shows a perspective view from behind of a device for picking up packs of magazines, newspapers and the like;

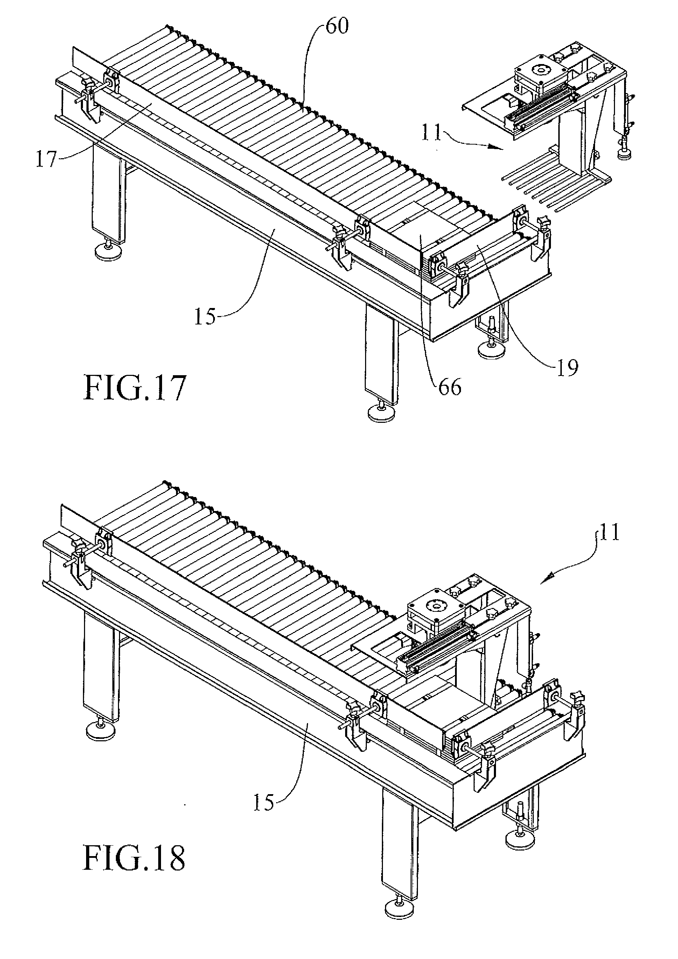

figure 17 shows a perspective view of a conveyor with motorised rollers;
figure 18 shows a perspective view of a conveyor with motorised rollers with the pickup device inserted under the base of the pack;

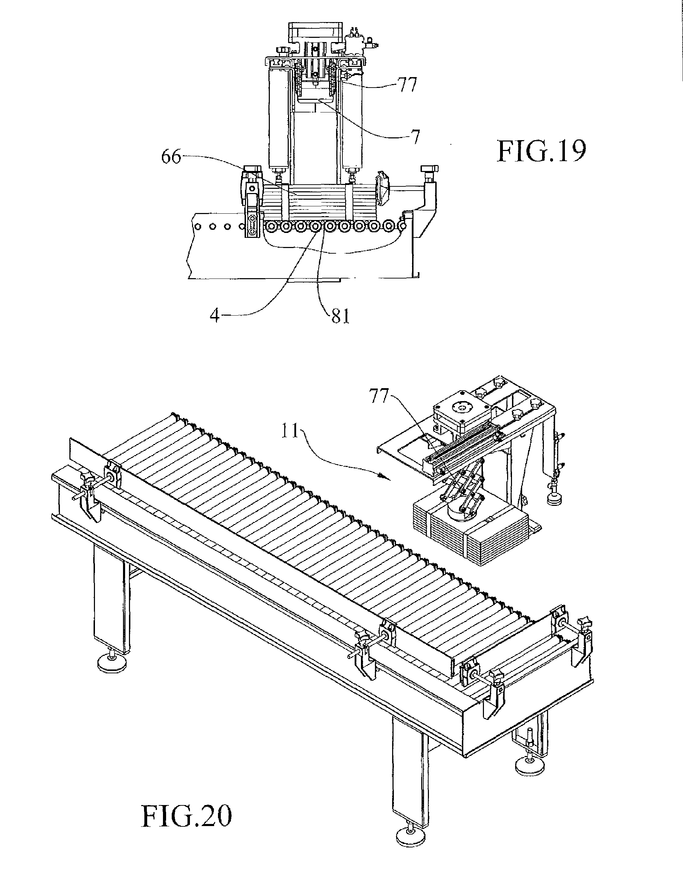

figure 19 shows an enlarged front view of the pickup device inserted under the base of the pack;
figure 20 shows a perspective view of the pack raised by the pickup device.

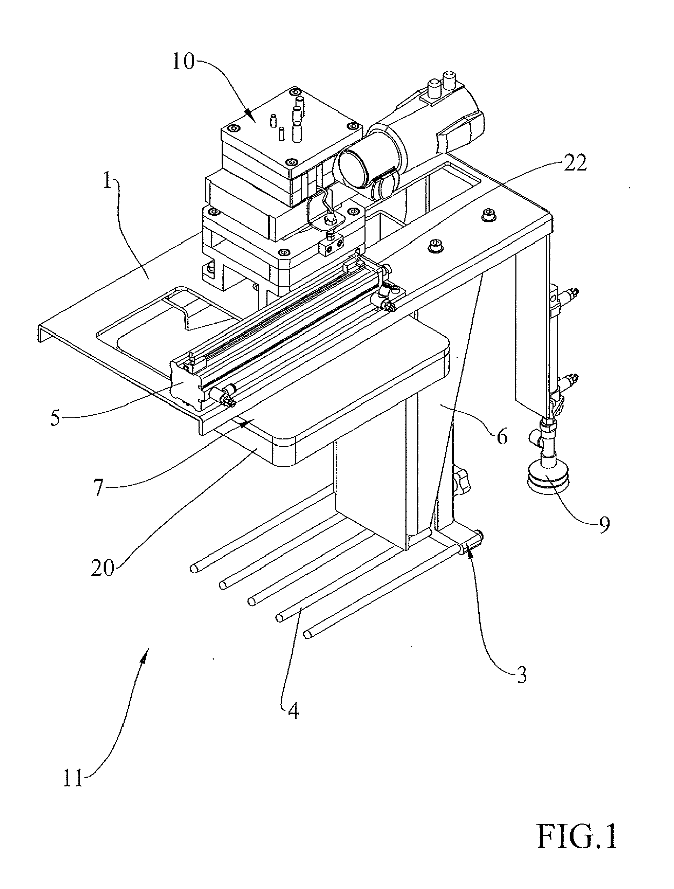

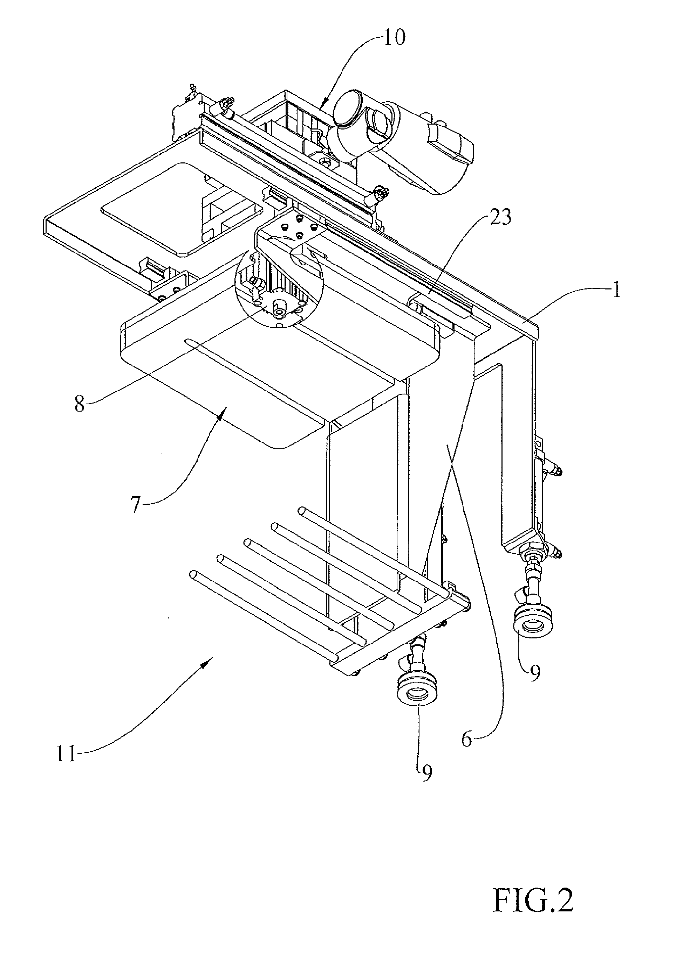

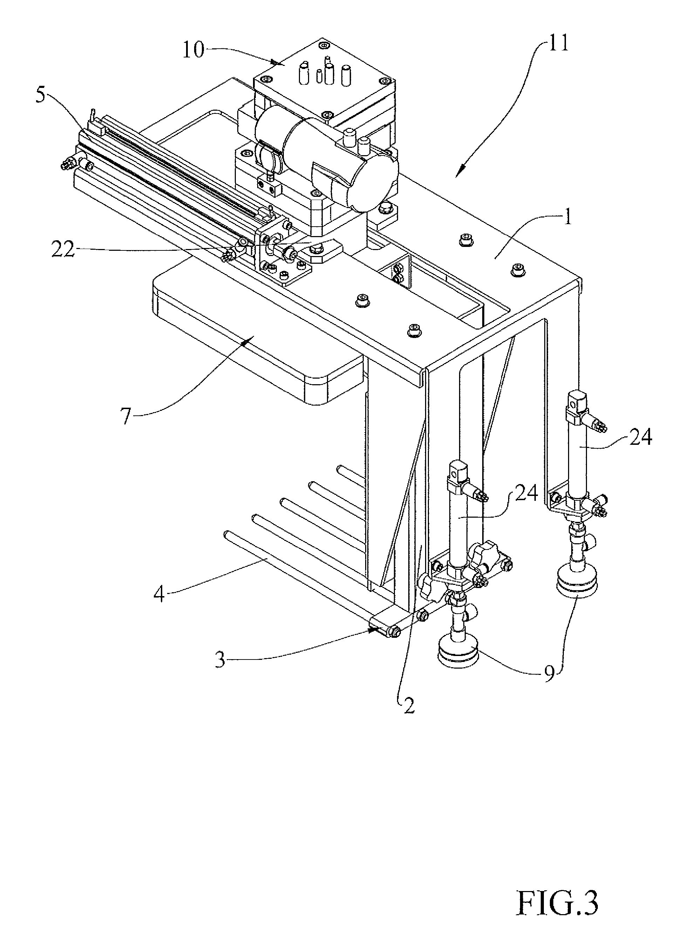

The pickup device or 'hand' 11 which is the subject of the present invention is made up (figures 1-3) of a structure 1, and a movable frame 2 slidable on guides 23 to which a fork 3 is fixed made up of five tines 4 and driven by a pneumatic cylinder 5. Also fixed to said structure 1 are fixed a counterthrust wall 6, a pressure assembly 7, necessary for stabilising the group of trays 16, driven by a pneumatic cylinder 8, two groups of rear suckers 9, which are necessary for depositing an inter-layer sheet 25, driven by cylinders 24 and by an assembly 10, called "motorised wrist" which is necessary for rotating and connecting to the movable structure of the palletising machine 18 shown in the overall views.

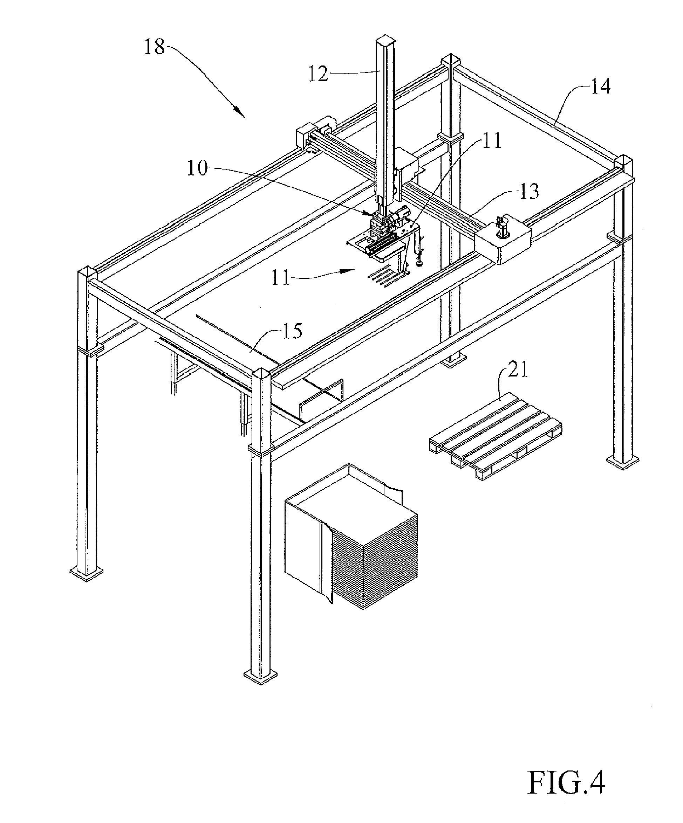

The pickup hand 11 (figure 4) is mounted slidably to the vertical sliding guide 12, by means of the wrist 10 which allows up to 270° of rotation. The vertical sliding guide 12 is fixed slidably to the transverse guide 13 which is fixed, also slidably, in a longitudinal direction, to the structure 14 of the palletising machine. These mechanisms, which are driven by servomotors and run by electronic software, are used to cause the pickup hand 11 to move on cartesian axes, so that it can pick up and deposit the product reliably and precisely.

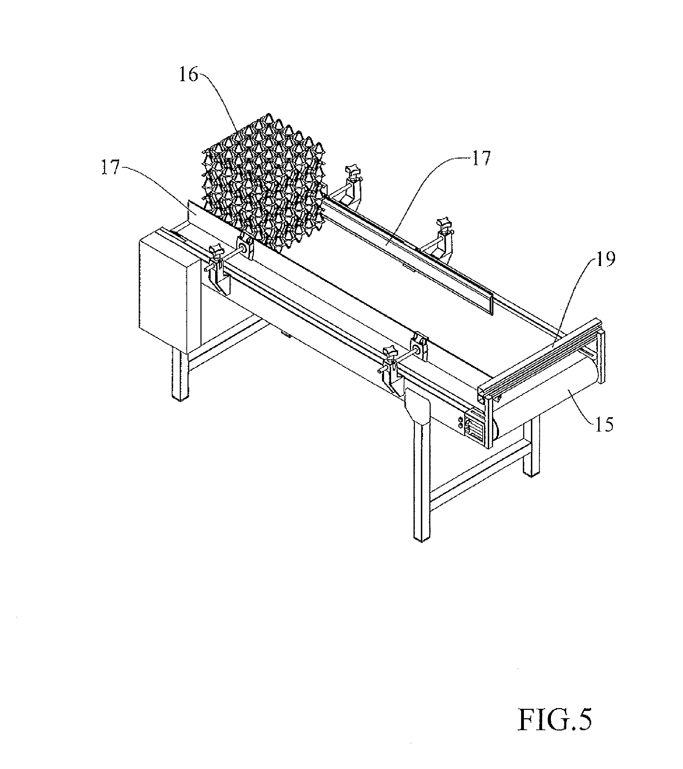

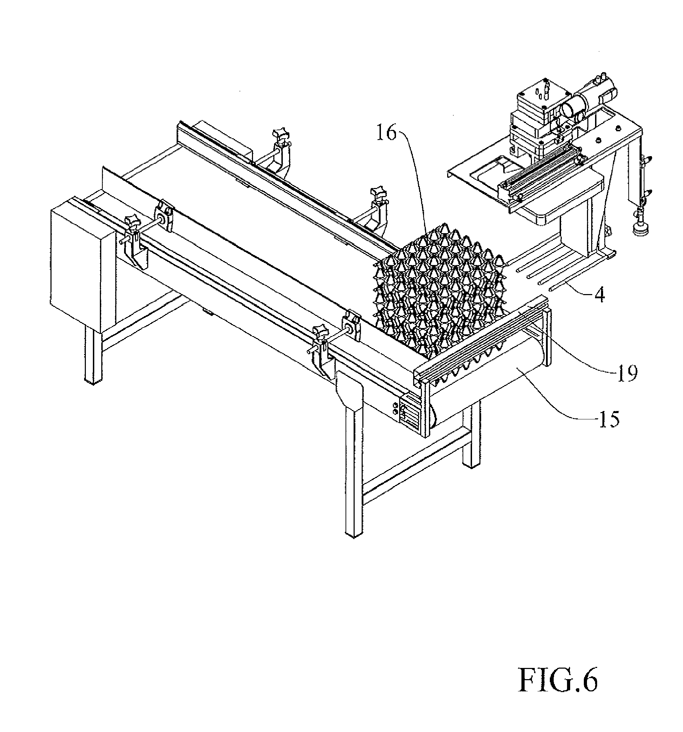

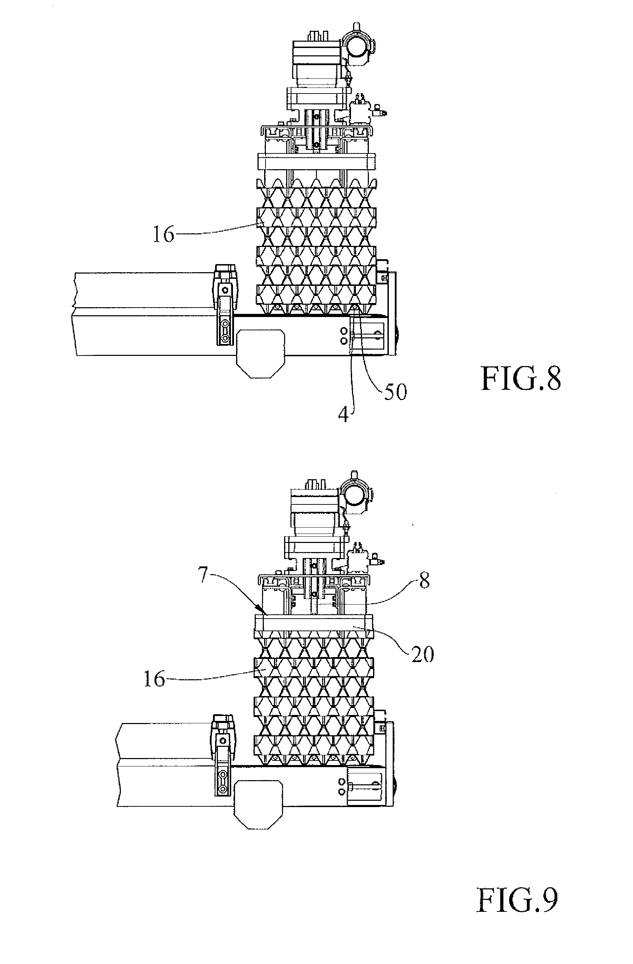

A conveyor belt 15 (figure 5) is used to bring the pack of trays 16 containing eggs, directed by suitable guides 17, to the inside of the palletising machine until it stops in contact with the stop 19 (figure 6) located for the purpose at the end of the conveyor belt 15. When the presence of the pack of trays 16 is detected, by means of movement on cartesian axes, the pickup hand 11 is positioned for the pickup by inserting the tines 4 inside the corrugations 50 in the trays (figures 8-9).

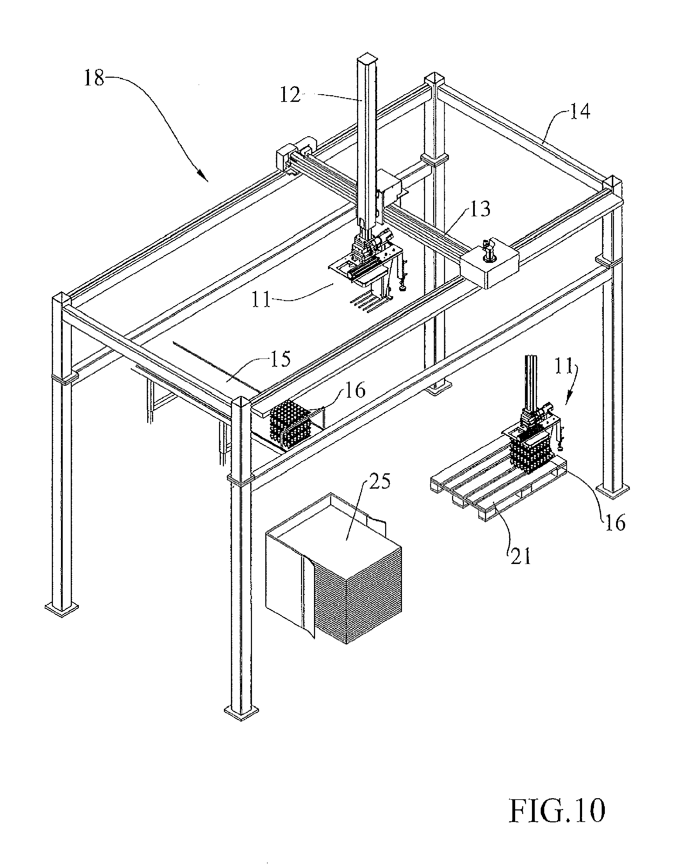

With the pack of trays 16 bearing against the fixed counterthrust wall 6, the pneumatic cylinder 8 is used to actuate the pressure assembly 7, which exerts light pressure on the pack of trays 16 through foam rubber padding 20, thus stabilising the pack of trays for the subsequent translation towards the storage bench 21. By means of movement on cartesian axes and the settings in the software installed in the control unit, the pickup hand 11 deposits the pack of trays 16 on the storage bench 21 (figure 10).

With the pack of trays 16 bearing against the storage bench 21, the pressure assembly 7 returns to the rest position powered by pneumatic cylinder 8; at this point, the pneumatic cylinder 5, by means of the connecting plate 22, drives the movable frame 2 slidably on the guides 23. The movable frame 2 has fixed to it the fork 3, with which the tines 4 are integral, At this command, the tines 4 slide out of the pack of trays 16, which remain stationary owing to the presence of the fixed counterthrust wall 6.

Having slid completely out of the pack of trays 16, the pickup hand 11 returns to its start-of-cycle position, by means of movement on cartesian axes; during its journey the movable frame 2 slides on guides 23 as a result of pneumatic cylinder 5 repositioning itself, and returns to its start-of-cycle position.

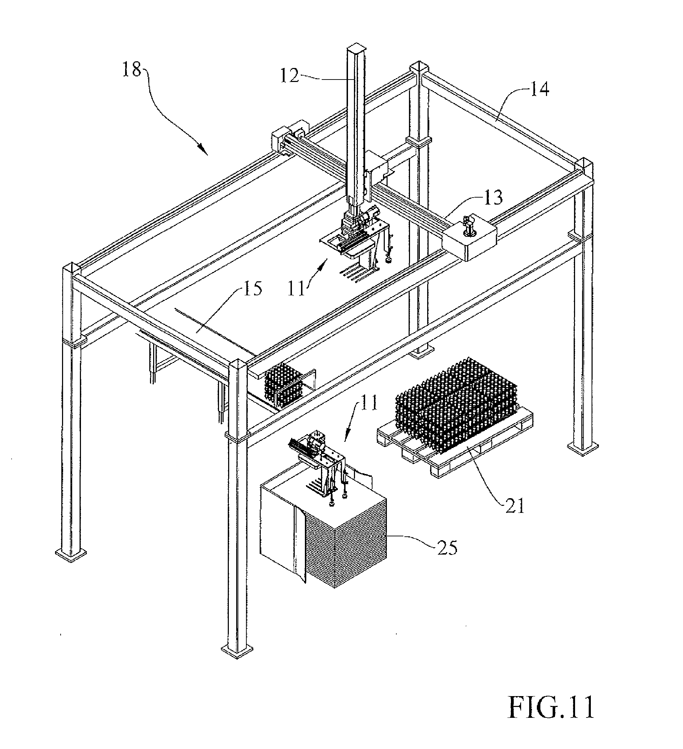

The cycle is repeated until the first layer of packs of trays 16 on the storage bench 21 is completed, as indicated in figure 11.

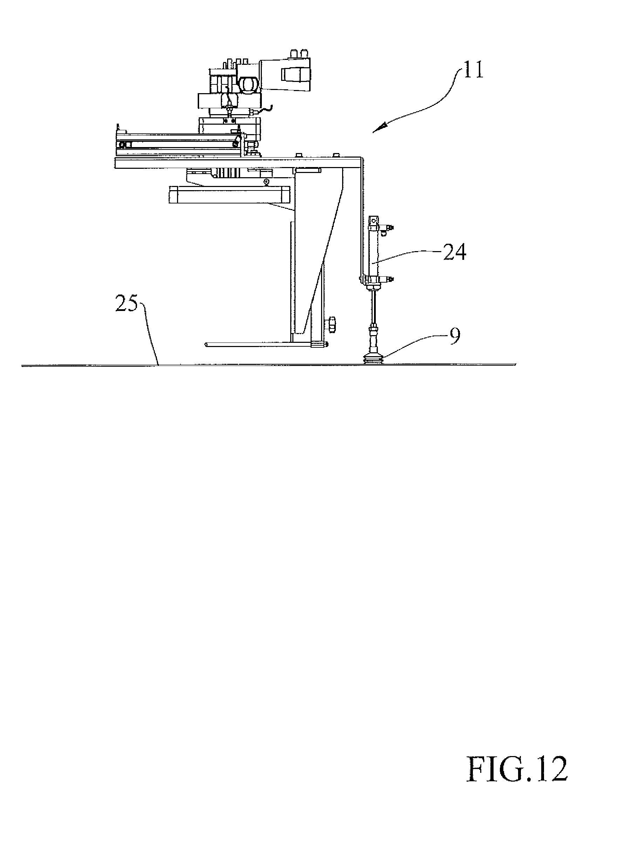

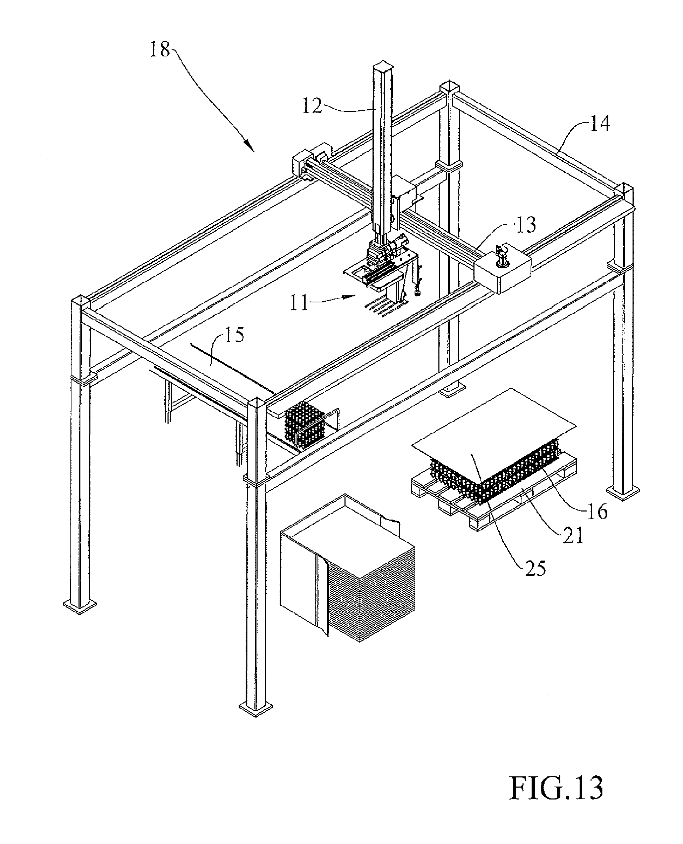

At this point, the pickup hand 11 activates cylinders 24 (figures 11-12), to which suckers 9 are attached. The latter are connected to the palletising machine's vacuum system, and pick up an inter-layer sheet 25 and position it on top of the first layer of packs of trays 16 (figure 13). Having positioned the inter-layer sheet 25, the suckers 9 are switched off and the cylinders 24 return to the start-of-cycle position.

The pickup hand 11 positions itself in proximity to the conveyor belt 15 and recommences positioning the packs of trays 16 on the storage bench 21 until the second layer is completed. At this point, it will insert a second inter-layer sheet 25 and will continue, following the same logic, until the storage bench is filled according to the customer's requirements.

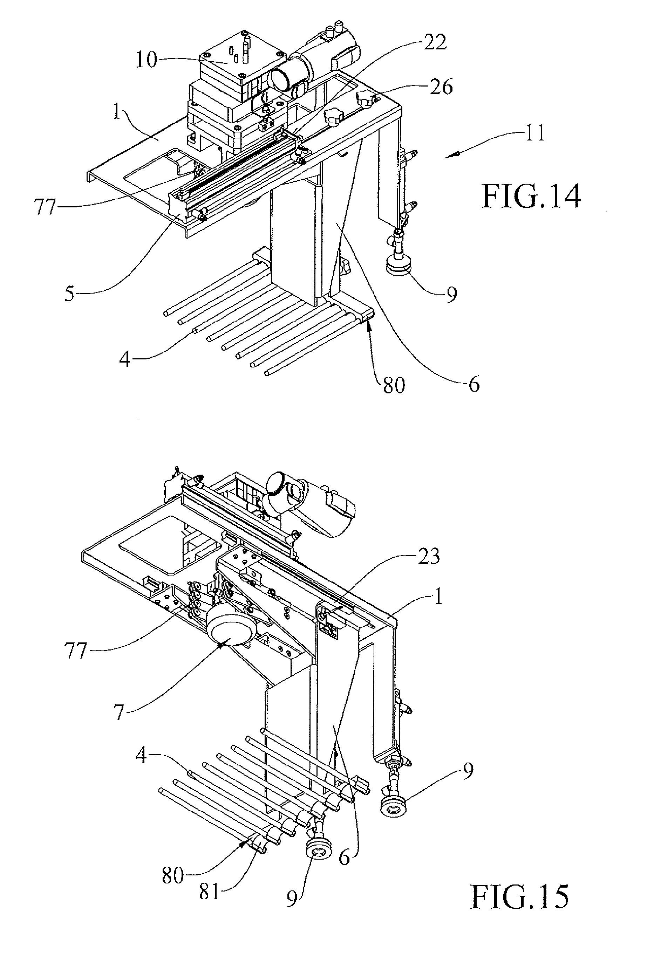

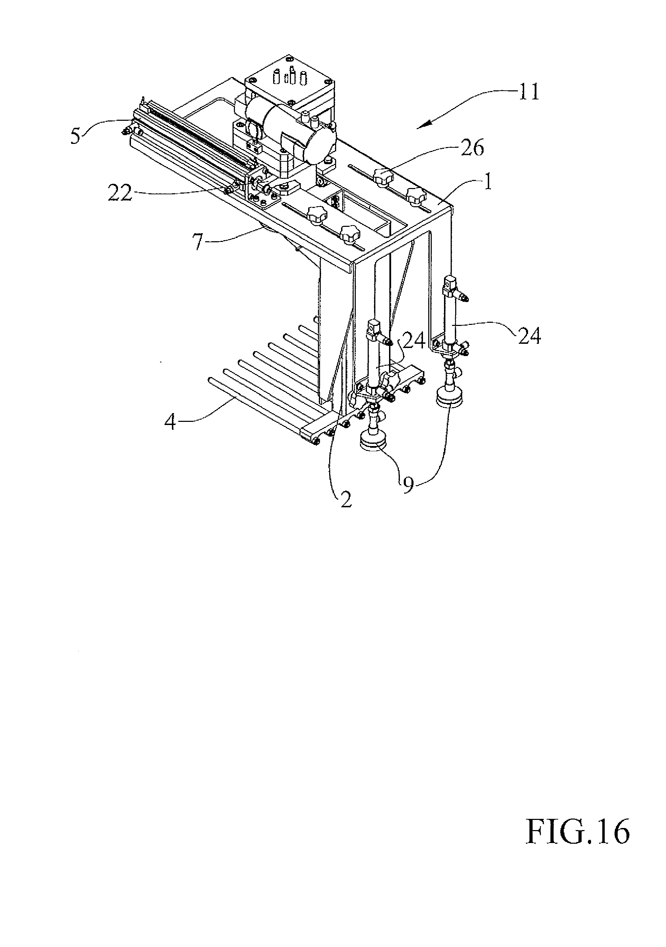

Inserting a movable counterthrust wall 6, adjustable and lockable in position by means of handles 26 instead of the fixed one, and using a pressure assembly 7 with greater travel (achieved by means of a series of linkages 77), as represented in figures 14, 15 and 16, result in a pickup hand 11 suitable for moving packs 66 of newspapers, magazines or similar products (i.e. with a flat supporting base without corrugations).

Transportation of newspapers or similar products 66, inside the machine, is performed in this case by the use of motorised rollers 60, in order to allow the tines of the pickup hand 11 to be inserted between the rollersok in order to pick up the packs (because there are no longer any corrugation as there were in the egg-trays). In order to be suitable for the different transporter means, the support element 80 for the tines 4 must provide consecutive cavities 81, slidably complementary to the rollers 60. The fork 3 is therefore slightly different.

The counterthrust wall 6 and the stop 19 must be adjustable, and the pressure assembly 7 must have a greater amount of travel, because the packs of newspapers, magazines or similar products have variable sizes, unlike the packs of egg-trays which have a standard size.

The entire cycle is performed according to the same sequence as described for the packs of egg-trays.

## Claims

1. Pickup device for a palletising machine (18) for moving packs (16, 66) of articles, preferably egg containing trays (16), **characterised by** comprising a structure (1) supporting a counterthrust wall (6) and a movable frame (2) slidable on guides (23), onto which a fork (3) including tines (4) is fixed, a pressure assembly (7) for stabilising the pack (16) to be moved and a motorised wrist (10) for rotating and connecting to the movable structure of the palletising machine (18).

2. Pickup device according to claim 1, **characterised by** comprising pickup suckers (9) for moving inter-layer sheets (25).

3. Pickup device according to claim 1, **characterised in that** said pressure assembly (7) is pneumatically controlled and comprises a linkage (77) with a travel from a raised rest position to a lowered position exerting pressure on the pack (16, 66) to be moved.

4. Pickup device according to claim 3, **characterised in that** said pressure assembly (7) comprises foam rubber padding (20).

5. Pickup device according to any one of the preceding claims, **characterised by** comprising a movable counterthrust wall (6), adjustable and lockable in position by means of handles (26), a support element (80) for the tines (4) of the fork (3) having a series of cavities (81) slidably couplable with rollers (60) on a conveyor for packs (66) of newspapers, magazines or the like.
